# EUROPEAN PATENT SPECIFICATION

(11) **EP 2 026 214 B1**
(45) Date of publication and mention of the grant of the patent: **18.08.2010**
(21) Application number: 08290559.7
(22) Date of filing: 13.06.2008
(51) Int. Cl.: G06F 13/28

(54) **Data transfer device, request issuing unit, and request issuing method**
Datenübertragungsvorrichtung, Anfrageausgabeeinheit und Anfrageausgabeverfahren
Dispositif de transfert de données, unité d'émission de requête, et procédé d'émission de requête

(30) Priority: 03.08.2007 JP 2007203056
(43) Date of publication of application: 18.02.2009
(73) Proprietor: Mimaki Engineering Co., Ltd., Tomi-shi, Nagano 389-0512 (JP)
(72) Inventor: Kodaira, Takeshi, 389-0512 Nagano (JP)
(74) Representative: Uchida, Kenji

(56) References cited:
- JP-A- 2002 163 229
- US-A- 5 752 081

## Description

The present invention relates to a data transfer device, a request issuing unit, and a request issuing method.

As one of data transfer methods, a data transfer by Direct Memory Access (DMA) is conventionally known. As a direct memory access controller (DMAC) for controlling data transfers by direct memory access, there is known a control arrangement which controls data transfers in response to request signals from external devices (for example, see Patent documents JP-A-9-207371 and JP-A-2002-163229).

In case of using a direct memory access controller for controlling data transfers in response to request signals from external devices, the direct memory access controller outputs an acknowledge signal to respond to a request signal for providing handshake before the data transfer. In this case, required as signals for controlling the data transfer are at least the request signal and the acknowledge signal. Therefore, at least a signal wire for the request signal and a signal wire for the acknowledge signal are conventionally required in a data transfer channel, thus increasing the system cost. In particular, when, for example, a plurality of data transfer channels are required according to the system, every channel requires a signal wire for the request signal and a signal wire for the acknowledge signal, thus increasing the system cost. Therefore, it is an object of the present invention to provide a data transfer device, a request issuing unit, and a request issuing method capable of solving the aforementioned problem.

To this end, there is provided a data transfer device for performing data transfer by direct memory access, comprising:
a memory;
a request issuing unit for issuing a request signal for requesting the data transfer to the memory; and
a direct memory access controller for controlling the data transfer, wherein
the request issuing unit comprises:
   a data presence determination section which determines whether or not transfer data as object of the data transfer are present;
   a signal outputting section which outputs a request signal for data transfer of a predetermined amount of data to be transferred at one time when the data presence determination section determines that the transfer data are present; and
   a determination timing control section which waits for a predetermined waiting period of time, required for completing data transfer of at least the predetermined amount of data to be transferred at one time, after the signal outputting section outputs the request signal, and then makes the data presence determination section to determine again whether or not transfer data are present, and wherein
   when the signal outputting section outputs the request signal, the direct memory access controller controls the data transfer by direct memory access of the amount of data to be transferred at one time in response to the request signal.
Preferably, the direct memory access controller is able to control various types of the data transfers of which amounts to be transferred at one time are different, and
the request issuing unit issues the request signal for requesting data transfer of which amount to be transferred at one time is minimal, among the various types of data transfers.
The invention also relates to a request issuing unit for issuing a request signal for requesting data transfer by direct memory access, comprising:
a data presence determination section which determines whether or not transfer data as object of the data transfer are present;
a signal outputting section which outputs a request signal for data transfer of a predetermined amount of data to be transferred at one time when the data presence determination section determines that the transfer data are present; and
a determination timing control section which waits for a predetermined waiting period of time, required for completing the data transfer of at least the amount of data to be transferred at one time, after the signal outputting section outputs the request signal, and then makes the data presence determination section to determine again whether or not transfer data are present.
The invention further relates to a request issuing method for issuing a request signal for requesting data transfer by direct memory access, comprising:
a data presence determination step for determining whether or not transfer data as object of the data transfer are present;
a signal outputting step for outputting a request signal for data transfer of a predetermined amount of data to be transferred at one time when it is determined that the transfer data are present in the data presence determination step; and
a waiting step for waiting for a predetermined waiting period of time, required for completing the data transfer of at least the amount of data to be transferred at one time, after the request signal is outputted, wherein
after the waiting step, the process is returned to the data presence determination step to determine again whether or not transfer data are present.

To solve the aforementioned problem, the present invention has the following arrangements.
(Arrangement 1) A data transfer device for performing data transfer by direct memory access, comprises: a memory; a request issuing unit for issuing a request signal for requesting the data transfer to the memory; and a direct memory access controller for controlling the data transfer, wherein the request issuing unit comprises: a data presence determination section which determines whether or not transfer data as object of the data transfer are present; a signal outputting section which outputs a request signal for data transfer of a predetermined amount of data to be transferred at one time when the data presence determination section determines that the transfer data are present; and a determination timing control section which waits for a predetermined waiting period of time, required for completing the data transfer of at least the amount of data to be transferred at one time, after the signal outputting section outputs the request signal, and then makes the data presence determination section to determine again whether or not transfer data are present, and wherein when the signal outputting section outputs the request signal, the direct memory access controller controls data transfer by direct memory access of the amount of data to be transferred at one time in response to the request signal. The data transfer device is, for example, a printer for conducting printing.

The request issuing unit may issue a request signal without receiving an acknowledge signal indicating that the direct memory access controller receives the request signal. As for terminals for control signals, the request issuing unit has, for example, a terminal for request signals and no terminal for acknowledge signals.

According to this arrangement, the data presence determination section in the request issuing unit determines whether or not transfer data to be transferred are present. When the transfer data are present, the signal outputting section outputs a request signal so as to issue a request for data transfer to the direct memory access controller. Normally, the direct memory access controller receives a next request before completion of the data transfer. To prevent overlapping receipt of request signals, the request issuing unit issues, for example, a request signal of minimal time. The request signal of minimal time means is a request signal corresponding to data transfer requiring minimal period of time for completing the data transfer of at least the amount of data to be transferred at one time. After outputting the request signal, the request issuing unit waits for a period of time required for completing the data transfer to be conducted at one time.

According to this arrangement, it is possible to suitably prevent overlapping receipt of request signals. Further, by waiting for a period of time required for completing the data transfer to be conducted at one time after outputting the request signal of minimal time, it is possible to suitably couple the outputting of the request signal and the data transfer. This also ensures the data transfer.

Since the overlapping receipt of request signals can be prevented and the outputting of the request signal and the data transfer can be coupled, it is possible to suitably perform data transfer by direct memory access without using acknowledge signal. Further, since acknowledge signal is no more required, it is possible to reduce the number of control signals required to control data transfer by direct memory access to half. This can also suitably reduce the system cost of the system for performing data transfer by direct memory access. Furthermore, since the number of signal wires required for controlling data transfer is reduced, the data transfer channels can be suitably provided even when only a small space is allowed for wiring.

The direct memory access controller controls direct memory access between the transfer target device provided as a part of the system and the memory. The transfer target device is, for example, an input/output device or a peripheral device and is connected to the memory via a data transfer channel. In the system, for example, a plurality of transfer target devices connected to the memory via respective data transfer channels can be provided. In this case, a signal wire for request signals is provided for each of the data transfer channels.

The direct memory access controller may be a conventionally well known direct memory access controller, such as a built-in direct memory access controller of a CPU (MPU), which can support the external request method of controlling data transfer in response to a request signal from an external device. In addition, the request issuing unit may be fabricated by using a FPGA or the like.

(Arrangement 2) The direct memory access controller is able to control various types of the data transfers of which amounts to be transferred at one time are different, and the request issuing unit issues the request signal for requesting data transfer of which amount to be transferred at one time is minimal, among the various types of data transfers.

According to this arrangement, the request issuing unit can suitably output a request signal of minimal time. In this case, the request issuing unit waits for a period of time required for completing data transfer of data to be transferred at one time corresponding to the request signal of minimal time. Accordingly, this arrangement can securely prevent overlapping receipt of request signals by the direct memory access controller. In addition, this arrangement can securely couple the outputting of the request signal and the data transfer, thereby ensuring the data transfer by direct memory access.

(Arrangement 3) A request issuing unit for issuing a request signal for requesting data transfer by direct memory access, comprises: a data presence determination section which determines whether or not transfer data as object of the data transfer are present; a signal outputting section which outputs a request signal for data transfer of a predetermined amount of data to be transferred at one time when the data presence determination section determines that the transfer data are present; and a determination timing control section which waits for a predetermined waiting period of time, required for completing the data transfer of at least the amount of data to be transferred at one time, after the signal outputting section outputs the request signal, and then makes the data presence determination section to determine again whether or not transfer data are present. According to this arrangement, the same effects of the arrangement 1 can be obtained.

(Arrangement 4) A request issuing method for issuing a request signal for requesting data transfer by direct memory access, comprises: a data presence determination step for determining whether or not transfer data as object of the data transfer are present; a signal outputting step for outputting a request signal for data transfer of a predetermined amount of data to be transferred at one time when it is determined that the transfer data are present in the data presence determination step; and a waiting step for waiting for a predetermined waiting period of time, required for completing the data transfer of at least the amount of data to be transferred at one time, after the request signal is outputted, wherein after the waiting step, the process is returned to the data presence determination step to determine again whether or not transfer data are present. According to this arrangement, the same effects of the arrangement 1 can be obtained.

According to the present invention, it is possible to suitably reduce system cost of a system for performing data transfer by direct access memory, for example.

Hereinafter, a preferred embodiment of the present invention will be described, by way of non-limiting example, with reference to the accompanying drawings in which:
Fig. 1 is an illustration showing a structural example of a printing system 10 according to an embodiment of the present invention;
Fig. 2 is an illustration showing a structural example of a request issuing unit 206; and
Fig. 3 is a flow chart showing an operation example of the request issuing unit 206; wherein
10 ... printing system, 12 ... PC, 14 ... printer, 102 ... memory, 104 ... CPU, 106 ... interface, 108 ... printing section, 110 ... bus, 202 ... DMAC (direct memory access controller), 204 ... buffer, 206... request issuing unit, 302 ... data presence determination section, 304... signal outputting section, 306... timing control section.

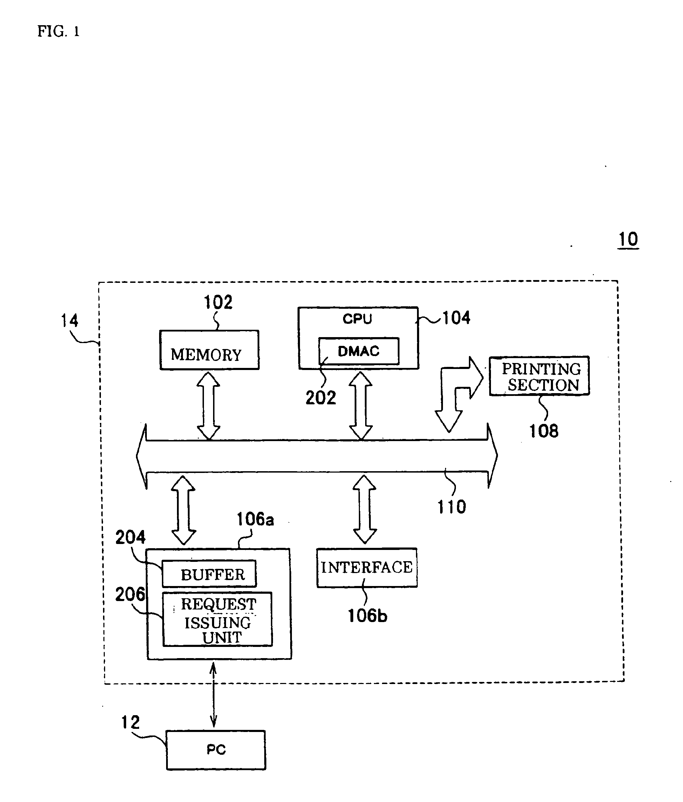

Fig. 1 shows a structural example of a printing system 10 according to the embodiment of the present invention. The printing system 10 is an example of systems for transferring data by means of Direct Memory Access (DMA) and comprises a PC 12 and a printer 14. The PC 12 is an example of transfer target devices as an aim of data transfer by direct memory access. In this embodiment, the PC 12 is a computer for controlling the printer 14 and, for example, supplies print data, to be printed by the printer 14, to the printer 14.

The printer 14 is an example of data transfer devices for data transfer by direct memory access. In this embodiment, the printer 14 is an inkjet printer which conducts printing based on the print data received from the PC 12. The printer 14 comprises a memory 102, a CPU 104, a plurality of interfaces 106a, 106b, a printing section 108, and a bus 110.

The memory 102 is a main memory of the printer 14 for storing various data such as the print data received from the PC 12. The CPU 104 is a controller for controlling the entire operation of the printer 14. In this embodiment, the CPU 104 has a built-in DMAC 202. The DMAC 202 is a direct memory access controller for controlling the data transfer in response to the request signals from external devices.

The plurality of interfaces 106a, 106b input or output data relative to the outside of the printer 14. The interface 106a is, for example, a USB interface and is connected to the PC 12. In this embodiment, the interface 106a has a buffer 204 and a request issuing unit 206. The buffer 204 is a buffer which temporarily stores data to be transferred from or to the PC 12. The request issuing unit 206 is a circuit which issues a request signal for requesting data transfer to the memory 102.

The interface 106b is an interface, for example, of which standard is different from that of the interface 106a. The interface 106b may be, for example, a card reader for inputting or outputting data relative to a memory card, or may be a parallel interface. The interface 106b has, for example, a buffer 204 and a request issuing unit 206, similarly to the interface 106a. The interface 106b may be a USB interface which is identical or similar to the interface 106a. Further, the interface 106b may be connected to a second PC 12. In this case, the printing system 10 comprises a plurality of PCs 12 as transfer target devices which are initiator modules of transfer. In the printer 14, the plurality of interfaces 106a, 106b corresponding to the plurality of PCs 12 have respective request issuing units 206 for issuing request signals for requesting data transfer to the corresponding PCs 12. Also in this case, the data transfer as will be described below can be suitably conducted.

The printing section 108 is a printing mechanical section for conducting printing according to print data stored in the memory 102, and comprises a print head such as an inkjet head and a driving section for moving a medium relative to the print head, for example. The printing section 108 may receive print data from the memory 102, for example, transferred by means of the direct memory access. In this case, the printing section 108 preferably has a request issuing unit which is, for example, identical or similar to the request issuing unit 206 in the interface 106a. The bus 110 is a bus for transferring the data within the printer 14 and composes, for example, at least a portion of the data transfer channels between the memory 102 and the interfaces 106a, 106b. Moreover, in this embodiment, the bus 110 and the respective interfaces 106a, 160b are connected to each other by data transfer channels provided with signal wires for request signals. According to this embodiment, suitable printing can be conducted based on the print data supplied from the PC 12 to the printer 14.

In this embodiment, no signal wire for acknowledge signals is provided in the data transfer channels between the interfaces 106a, 106b and the memory 102. Accordingly, the request issuing unit 206 issues a request signal without receiving an acknowledge signal from the DMAC 202. As for terminals for control signals, the request issuing unit 206 has, for example, a terminal for request signals and no terminal for acknowledge signals.

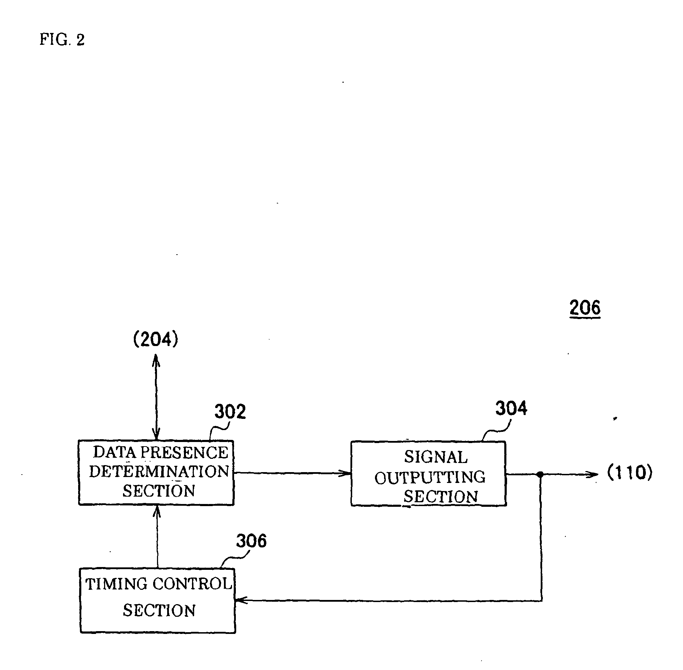

Fig. 2 shows a structural example of the request issuing unit 206. In this embodiment, the request issuing unit 206 comprises a data presence determination section 302, a signal outputting section 304, and a timing control section 306.

The data presence determination section 302 checks the state of the buffer 204 to determine whether or not transfer data as object of the data transfer by direct memory access are present, for example. The data presence determination section 302 notifies the signal outputting section 304 of a result of the determination. The data presence determination section 302 may determine the presence of the transfer data based on the information from the PC 12 as the transfer target device.

Based on the notification of the data presence determination section 302, the signal outputting section 304 outputs a request signal for requesting data transfer by direct memory access. In this embodiment, when the data presence determination section 302 determines that the transfer data are present, the signal outputting section 304 outputs a request signal for requesting data transfer of a predetermined amount of data to be transferred at one time.

The timing control section 306 controls timing of the determination of the data presence determination section 302 about presence of transfer data. In this embodiment, the timing control section 306 waits for a predetermined waiting period of time after the signal outputting section 304 outputs the request signal. The waiting period of time is set to at least an amount of time required for completing the data transfer by direct memory access of the amount of the data to be transferred at one time. After waiting, the timing control section 306 makes the data presence determination section 302 to determine whether or not transfer data are present.

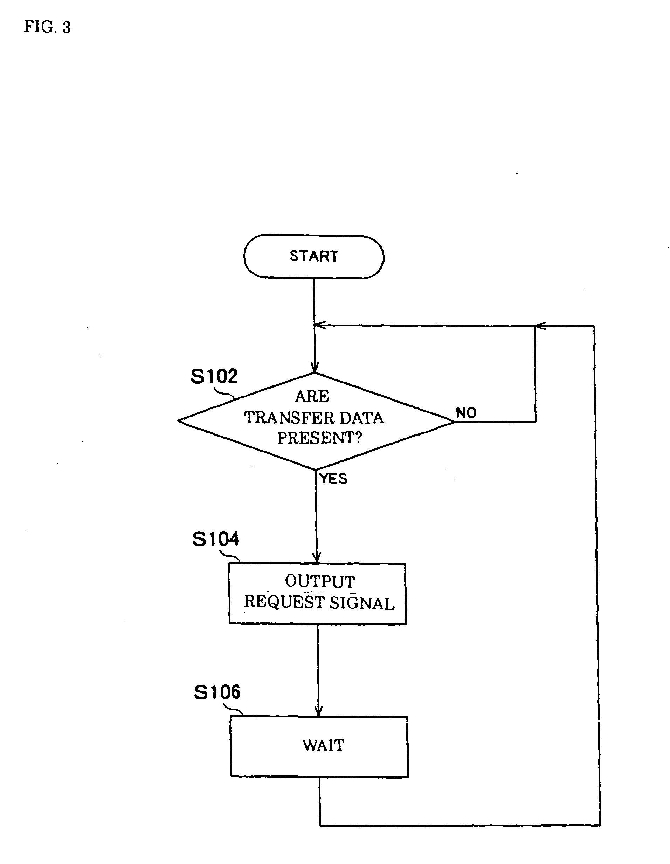

Fig. 3 is a flow chart showing an example of operation of the request issuing unit 206. In the request issuing unit 206 of this embodiment, for example, the data presence determination section 302 first determines whether or not transfer data as object of data transfer are present (data presence determination step S102). When it is determined that the transfer data are not present (No at S102), the data presence determination step S102 is repeated after a lapse of a certain period of time, for example.

When the data presence determination section 302 determines that the transfer data are present (Yes at S102), the signal outputting section 304 outputs a request signal (signal outputting step S104). After the request signal is outputted, the timing control section 306 controls timing to wait for an amount of time required for completing data transfer by direct memory access of at least the amount of data to be transferred at one time (waiting step S106). After waiting, the process is returned to the data presence determination step S102 and the following steps are repeated.

According to the aforementioned actions, after outputting every request signal, the request issuing unit 206 waits while the data transfer corresponding to the request signal is performed. After waiting, the request issuing unit 206 determines again whether or not transfer data are present. When the transfer data are present, the request issuing unit 206 outputs a request signal again. In response to the request signal outputted by the signal outputting section 304, the DMAC 202 controls data transfer by direct memory access of a predetermined amount of data to be transferred at one time.

By the aforementioned actions, this embodiment can prevent overlapping receipt of request signals without using acknowledge signal, for example. Further, by suitably coupling the output of a request signal and data transfer, the output of the request signal and the data transfer corresponding to the request signal can be suitably managed.

Accordingly, data transfer by direct memory access can be suitably performed without using acknowledge signal, for example. Since acknowledge signal is no more required, it is possible to reduce the number of control signals required to control data transfer by direct memory access to half. This can also suitably reduce the system cost of the system for performing data transfer by direct memory access. Furthermore, since the number of signal wires required for controlling data transfer is reduced, the data transfer channels can be suitably provided even when only a small space is allowed for wiring.

The DMAC 202 (see Fig. 1) for receiving request signals may receive multi-bit request signals so that the DMAC 202 is able to receive various types of request signals. In this case, the DMAC 202 can control various types of data transfers of which amounts to be transferred at one time are different, according to received request signal. Further in this case, the signal outputting section 304 preferably issues a request signal for requesting data transfer of which amount to be transferred at one time is minimal, among the various types of data transfers. According to this arrangement, by using the request signal for data transfer requiring minimal time, the waiting period of time in which the request issuing unit 206 waits the completion of the transfer is reduced, thereby further ensuring data transfer by direct memory access.

## Claims

1. A data transfer device (14) comprising
a request issuing unit (206) for issuing a request signal for requesting data transfer by direct memory access to a memory (102), wherein said request issuing unit comprises a data presence determination section (302) which determines whether or not transfer data as object of said data transfer are present, **characterized in that** said request issuing unit comprises :
a signal outputting section (304) which outputs a request signal for data transfer of a predetermined amount of data to be transferred at one time when said data presence determination section determines that said transfer data are present; and
a determination timing control section (306) which waits for a predetermined waiting period of time, required for completing data transfer of at least said predetermined amount of data to be transferred at one time, after said signal outputting section outputs said request signal, and then makes said data presence determination section (302) to determine again whether or not transfer data are present.

2. A data transfer device according to claim 1, **characterized in that** it comprises a direct memory access controller (202) for controlling said data transfer, and wherein when said signal outputting section (304) outputs said request signal, said direct memory access controller (202) controls said data transfer by direct memory access of said amount of data to be transferred at one time in response to said request signal.

3. A data transfer device according to claim 2, wherein said direct memory access controller (202) is able to control various types of said data transfers of which amounts to be transferred at one time are different, and
said request issuing unit (206) issues said request signal for requesting data transfer of which amount to be transferred at one time is minimal, among said various types of data transfers.

4. A request issuing method for issuing a request signal for requesting data transfer by direct memory access, comprising a data presence determination step (102) for determining whether or not transfer data as object of said data transfer are present
**characterized in that** it comprises:
a signal outputting step (104) for outputting a request signal for data transfer of a predetermined amount of data to be transferred at one time when it is determined that said transfer data are present in said data presence determination step; and
a waiting step (106) for waiting for a predetermined waiting period of time, required for completing the data transfer of at least said amount of data to be transferred at one time, after said request signal is outputted, wherein
after said waiting step, the process is returned to said data presence determination step to determine again whether or not transfer data are present.

## Patentansprüche

1. Datenübertragungsvorrichtung (14), umfassend:
eine Anforderungsherausgabeeinheit (206) zum Herausgeben eines Anforderungssignals zum Anfordern einer Datenübertragung mittels Direktspeicherzugriff an einen Speicher (102), wobei die Anforderungsherausgabeeinheit einen Datenpräsenzbestimmungsabschnitt (302) umfasst, der bestimmt, ob Übertragungsdaten als Objekt der Datenübertragung vorhanden sind,
**dadurch gekennzeichnet, dass** die Anforderungsherausgabeeinheit umfasst:
einen Signalausgabeabschnitt (304), der ein Anforderungssignal zur Datenübertragung einer auf einmal zu übertragenden vorbestimmten Datenmenge ausgibt,
wenn der Datenpräsenzbestimmungsabschnitt bestimmt, dass die Übertragungsdaten vorhanden sind; und
einen Bestimmungszeitgabesteuer- bzw. Regelabschnitt (306), der während einer vorbestimmten Wartezeitspanne wartet, die zur Fertigstellung der Datenübertragung wenigstens der auf einmal zu übertragenden vorbestimmten Datenmenge erforderlich ist, nachdem der Signalausgabeabschnitt das Anforderungssignal ausgibt, und sodann veranlasst, dass der Datenpräsenzbestimmungsabschnitt (302) erneut bestimmt, ob Übertragungsdaten vorhanden sind.

2. Datenübertragungsvorrichtung nach Anspruch 1, **dadurch gekennzeichnet, dass** sie eine Direktspeicherzugriffssteuerung bzw. Regelung (202) zum Steuern bzw. Regeln der Datenübertragung umfasst, wobei dann, wenn der Signalausgabeabschnitt (304) das Anforderungssignal ausgibt, die Direktspeicherzugriffssteuerung bzw. Regelung (202) die Datenübertragung mittels Direktspeicherzugriff der auf einmal zu übertragenden Datenmenge in Reaktion auf das Anforderungssignal steuert bzw. regelt.

3. Datenübertragungsvorrichtung nach Anspruch 2, wobei die Direktspeicherzugriffssteuerung bzw. Regelung (202) in der Lage ist, verschiedene Arten von Datenübertragungen, von denen die auf einmal zu übertragenden Mengen verschieden sind, zu steuern bzw. zu regeln, und
die Anforderungsherausgabeeinheit (206) das Anforderungssignal zum Anfordern der Datenübertragung, von der die auf einmal zu übertragende Menge minimal ist, unter den verschiedenen Typen von Datenübertragungen herausgibt.

4. Anforderungsherausgabeverfahren zum Herausgeben eines Anforderungssignals zum Anfordern einer Datenübertragung mittels Direktspeicherzugriff, umfassend einen Datenpräsenzbestimmungsschritt (102) zum Bestimmen, ob Übertragungsdaten als Objekt der Datenübertragung vorhanden sind,
**dadurch gekennzeichnet, dass** es umfasst:
einen Signalausgabeschritt (104) zum Ausgeben eines Anforderungssignals zur Datenübertragung einer auf einmal zu übertragenden vorbestimmten Datenmenge,
wenn in dem Datenpräsenzbestimmungsschritt bestimmt wird, dass die Übertragungsdaten vorhanden sind; und
einen Warteschritt (106) zum Warten während einer vorbestimmten Wartezeitspanne, die zum Fertigstellen der Datenübertragung wenigstens der auf einmal zu übertragenden Datenmenge erforderlich ist, nachdem das Anforderungssignal ausgegeben ist, wobei
nach dem Warteschritt der Prozess zu dem Datenpräsenzbestimmungsschritt zurückkehrt, um erneut zu bestimmen, ob Übertragungsdaten vorhanden sind.

## Revendications

1. Dispositif de transfert de données (14) comprenant :
une unité d'émission de requête (206) destinée à délivrer un signal de requête afin de demander un transfert de données par accès direct à la mémoire à une mémoire (102), dans lequel ladite unité d'émission de requête comprend :
une section de détermination de présence de données (302) qui détermine si les données de transfert en tant qu'objet dudit transfert de données sont présentes ou non,
**caractérisé en ce que** ladite unité d'émission de requête comprend :
une section de sortie de signal (304) qui délivre un signal de requête pour le transfert de données d'une quantité prédéterminée de données à transférer en une fois lorsque ladite section de détermination de présence de données détermine que lesdites données de transfert sont présentes ; et
une section de commande de séquence de détermination (306) qui attend pendant une période d'attente prédéterminée, requise pour la réalisation complète d'un transfert de données d'au moins ladite quantité prédéterminée de données à transférer en une fois, après que ladite section de sortie de signal a délivré ledit signal de requête, et fait ensuite en sorte que ladite section de détermination de présence de données (302) détermine de nouveau si des données de transfert sont présentes ou non.

2. Dispositif de transfert de données selon la revendication 1, **caractérisé en ce qu'**il comprend un contrôleur d'accès direct à la mémoire (202) destiné à commander ledit transfert de données, et dans lequel, lorsque ladite section de sortie de signal (304) délivre ledit signal de requête, ledit contrôleur d'accès direct à la mémoire (202) commande ledit transfert de données par accès direct à la mémoire de ladite quantité de données à transférer en une fois en réponse audit signal de requête.

3. Dispositif de transfert de données selon la revendication 2, dans lequel ledit contrôleur d'accès direct à la mémoire (202) peut commander différents types desdits transferts de données dont les quantités à transférer en une fois sont différentes, et
ladite unité d'émission de requête (206) délivre ledit signal de requête afin de demander un transfert de données dont la quantité à transférer en une fois est minimale, parmi lesdits différents types de transferts de données.

4. Procédé d'émission de requête destiné à délivrer un signal de requête afin de demander un transfert de données par accès direct à la mémoire, comprenant:
une étape de détermination de présence de données (102) destinée à déterminer si des données de transfert en tant qu'objet dudit transfert de données sont présentes ou non
**caractérisé en ce qu'**il comprend :
une étape de sortie de signal (104) destinée à délivrer un signal de requête pour un transfert de données d'une quantité prédéterminée de données à transférer en une fois lorsqu'il est déterminé que lesdites données de transfert sont présentes dans ladite étape de détermination de présence de données ; et
une étape d'attente (106) destinée à attendre pendant une période d'attente prédéterminée, requise pour la réalisation complète d'un transfert de données d'au moins ladite quantité de données à transférer en une fois, après que ledit signal de requête a été délivré, dans lequel
après ladite étape d'attente, le processus est renvoyé à ladite étape de détermination de présence de données afin de déterminer de nouveau si des données de transfert sont présentes ou non.
